# EUROPEAN PATENT APPLICATION

(11) **EP 0 945 865 A2**
(43) Date of publication of application: **29.09.1999**
(21) Application number: 99302258.1
(22) Date of filing: 23.03.1999
(51) Int. Cl.: G11B 27/10, G07F 17/16, H04H 1/02, G10H 1/00

(54) **Method for selection of audio samples**

(30) Priority: 24.03.1998 GB 9806288
(71) Applicant: Soho Soundhouse Ltd., London WC2H 0DT (GB)
(72) Inventor: Arbiter, John, London NW3 2UB (GB); Pfaff, Rupert, Teesdale Close, London E2 6PQ (GB)
(74) Representative: Rees, David Christopher

(57) **Abstract**

A method and apparatus for selecting an audio sample or a MIDI file from a plurality of audio samples and/or MIDI files. The samples and files are stored in a digitised format and indexed according to one or more fields. A user then selects one or more fields from the index and selects a sample from the selected field. The selected sample is then played back so that the user can listen to the selection.

## Description

The present invention relates to a device allowing the selection of audio samples and/or MIDI files.

Samples are relatively short passages of audio material, often musical or percussion, which electronic musicians can freely use within their composition as extra instruments. Samples are currently available to musicians as collections on Sample CDs (compact discs). So, for example to use a drum beat from a sample CD, the musician would select one and then record the desired audio clip into his/her sampler or similar audio playback device.

MIDI files are musical recordings in a digitised form. They can be played by suitable playback devices such as keyboard/synthesisers. They include for example backing tracks which can be used by performers.

With so many sample CDs on the market, the problem for the consumer is to decide which CD to chose. There are two current systems which endeavour to help the customer. The first is the CD jukebox. This is a 200 disc CD changing device enabling the user to select a particular disc and track. The user decides what to listen to by browsing through a printed brochure. Usually, no additional information on individual tracks and samples is available. The second system is Internet web sites. These allow users to search through individual audio clips and then listen to any from the resultant list. The quality of the audio however is often severely limited by the delivery system.

Of these two systems, really only the 200 disc CD changing system relates directly to retailers, as web sites of this nature are designed primarily for home use and sell the audio on a track-by-track basis.

The present systems are insufficient for several reasons. The CD changer system does not allow users to search for particular types of music. To find a specific type of CD, the user would have to browse through an entire printed catalogue. The CD changer system is not easily extendible. When new CDs are produced, a new catalogue would have to be produced. The printing of these often lags behind the delivery of the new discs, which means consumers cannot listen to these discs even if they are in the CD changer as they would not know where they are. Also there is a finite limit of 200 CDs per changer, meaning only a small selection is available to the customer. Despite the CD changer system allowing users to listen to the entire CD, there is no quick way in which to locate tracks of interest, without resorting to the CD booklet, which is often inaccessible.

Whilst the web site offers a search facility, the quality of the audio which it delivers is dramatically lower than that offered by conventional CD players which delivers audio at 16 bit resolution, 44.1 kHz sample rate.

By offering audio files individually, the web site system does not give the user full choice over what is listened to, they have no way to browse through an entire title. Indeed if someone wanted to buy all the audio files which were featured on a sample CD, the total cost would be far greater, than buying the original CD. To judge fully any product that a consumer is buying, they should be able to listen to the contents of the sample CD in its entirety.

Both the CD changer and web site systems are developed by individual distributors of sample CDs and MIDI files, and as such only carry a very limited stock of all that is available.

It is an object of the present invention to provide users with easy and quick access to as full a range of sample CDs and MIDI files as possible, with the ability to cross-reference between titles.

According to the present invention, there is provided a method of selecting an audio sample from a plurality of audio samples which comprises: storing the samples in a digitised format in a digital storage medium; indexing the samples according to one or more fields; selecting one or more fields from the index; selecting a sample from a selected field; and playing the selected sample in order that it might be listened to. This can be repeated until the desired sample has been identified and this can then be purchased.

Preferably, the digital storage medium is a computer hard disc. Preferably the selection steps are carried out using a user interface including a VDU and a keyboard and/or a mouse (or its equivalent). The fields and samples can be visually displayed for selection prior to listening.

It might be possible to purchase the required sample by downloading from the digital storage medium on to a suitable format. it may even be possible to effect the transaction using a credit card together with a conventional card reader associated with the storage medium and user interface. Alternatively, the selected sample can simply be purchased from a store of ready-made recordings.

The invention is equally applicable to the selection of MIDI files. In this case, however, it is preferable that the selected file be played back using a synthesiser/keyboard.

The invention also extends to apparatus for carrying out the above method, the apparatus comprising: a store of a plurality of audio samples and/or MIDI files in a digitised format; means for indexing the samples/files; and means for playing back a selected sample.

The invention also extends to the magnetic medium storing the digital audio data and the means allowing the selection procedure to be carried out using the user interface.

The invention may provide an emulation of a CD-jukebox, but with practically unlimited capacity and an ability to cross-reference between titles. For example, a user can search on orchestral string sounds and be presented with a list of titles from a number of different distributors, which can then be listened to. Also, by searching on a particular song, the user can then select from various MIDI files matching his/her requirements and then listen to them.

By using a graphical interface, with which the majority of modern musicians will be comfortable, the invention allows for quick, easy and flexible searching of large quantities of products. Also through using a CD player metaphor as the control interface, users will be able to search through the audio from each title as if it were a real sample CD but with the advantages of extremely quick access and seeing specific information on each sample.

The invention may be carried into practice in various ways and some embodiments will now be described by way of example with reference to the accompanying drawings in which:-
Figure 1 is a schematic diagram of a first embodiment of the invention for use with samples; and
Figure 2 is a schematic diagram of a second embodiment of the invention for use with MIDI files.

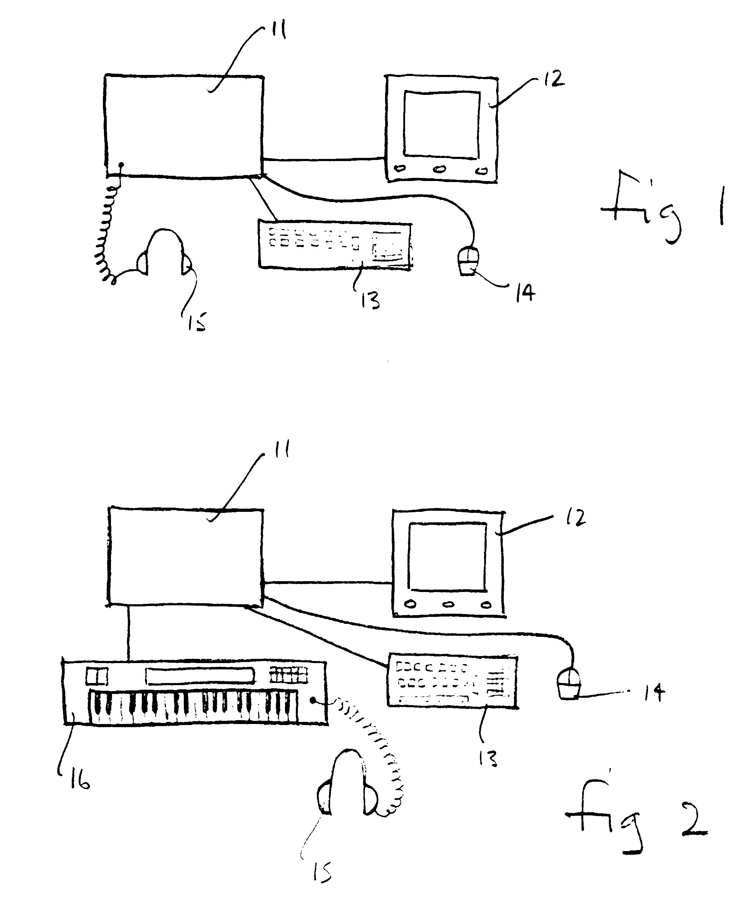

The apparatus shown in Figure 1 comprises a video monitor 12, an alphanumeric keyboard 13, a computer mouse 14 and a pair of audio headphones 15, all connected to a central control unit 11 in the form of a personal computer. The control unit 11 includes a hard disc drive and a processor. The hard disc has stored on it all the various audio samples and the indexing details.

To use the system, a user uses the keyboard 13, mouse 14 and monitor to select a particular sample using the fields into which the samples are indexed. When selected, the sample can be listened to using the headphones 15.

Thus the system can provide a software based multimedia program, which accesses a database of hard drive based audio, available on demand to users. It allows users effectively to pick a CD title through various searchable criteria, then listen to the audio contained on it, with CD quality sound. Additionally, the user is given information about the title and each individual track, such as the pitch or tempo of the samples. Users can also search within the audio files from the sample CD title for particular track or rewind/fast forward, skip tracks and pause by using the CD player like interface.

The embodiment of Figure 2 is particularly applicable for use with MIDI files. It is similar to the embodiment of Figure 1 except that it additionally includes a synthesiser 16 with a MIDI link to the control unit 11. This provides the necessary higher quality output.

Thus the system can provide a combination of a software based multimedia system, which contains a database of MIDI files and a hardware based professional synthesiser. The user can search on various criteria to find a particular song and then listen back to it via the professional synthesiser.

Both embodiments would normally be built into locked bespoke cabinets, which contain the personal computer 11 (and the synthesiser) required to run the software, a built-in VDU, headphone connections and a custom designed pointing device to control the program.

The present invention represents an advance on older systems in various ways: Neither the CD changing system nor the web site concept give the user access to the full range of sample CDs available. Typically, both systems are set up by distributors of products, which restrict the products available to consumers. The system of the present invention is designed to incorporate effectively as many sample CDs from as many different manufacturers as possible, giving much greater choice to the consumer.

Also the systems are based around a hard-drive delivery of media and so give users access to audio far quicker than either the Internet or CD changer based systems. For example, once a CD has been picked, it then has to be loaded into the player or once a sound file has been selected on an Internet web site, it then has to download (typically a 1 minute stereo, CD quality sound file will take about 55 minutes to be transferred).

Furthermore, by integrating searching system, users can look for CDs and MIDI files via categories such as features artist, label, new releases and styles/types of music or instruments such as female vocal song, dance drums, electric guitar, ethnic percussion etc. As the search mechanism is extendible, new styles or categories can be easily added, allowing users to find any new CDs as they are released. Users are able to search through the audio on a sample CD quickly, via a control which shows both track number and title, allowing users to find quickly specific samples on the sample CD.

Additionally, by offering specific information on each track of a sample CD, users can see exactly what sounds they are listening to. Although this is also possible if the user has access to the sample CD inlay card, the legibility is far greater with an on-screen display.

## Claims

1. A method of selecting an audio sample by a user from a plurality of audio samples, which method comprises storing the samples in a digitised format in a digital storage medium, characterised by the steps of: indexing the samples according to one or more fields; selecting one or more of the fields from the index; selecting an audio sample from a selected field; and playing the selected sample whereby the sample can be listened to by the user.

2. A method as claimed in Claim 1, characterised in that the fields and the samples are visually displayed for selection prior to the user listening to the samples.

3. A method of selecting a MIDI file by a user from a plurality of MIDI files, which method comprises storing the MIDI files in a digital storage medium, characterised by the steps of: indexing the MIDI files according to one or more fields; selecting one or more of the fields from the index; selecting a MIDI file from a selected field; and playing the selected MIDI file using a musical synthesiser (16).

4. A method as claimed in Claim 3, characterised in that the fields and the MIDI files are visually displayed for selection prior to the user listening to the MIDI files.

5. A method as claimed in any preceding Claim, characterised in that the digital storage means is a computer hard disc.

6. A method as claimed in any preceding Claim, characterised in that the selection steps are carried out using a user interface comprising a VDU (12), and a keyboard (13) and/or a mouse (14).

7. A method as claimed in any preceding Claim, characterised in that a selected sample is downloaded from the digital storage medium onto a suitable format for purchase by the user.

8. Apparatus for allowing a user to select an audio sample from a plurality of audio samples, the apparatus comprising a store (11) of the plurality of audio samples in a digitised format, characterised by means for indexing the samples and means for playing back a selected one of the samples.

9. Apparatus for selecting a MIDI file from a plurality of MIDI files, the apparatus comprising a store of the plurality of MIDI files, characterised by means for indexing the MIDI files and means for playing back a selected one of the MIDI files.

10. Apparatus as claimed in Claim 9, characterised in that the means for playing back the selected MIDI file comprises a musical synthesiser (16).
